# EUROPEAN PATENT APPLICATION

(11) **EP 2 615 317 A1**
(43) Date of publication of application: **17.07.2013**
(21) Application number: 11823531.6
(22) Date of filing: 05.09.2011
(51) Int. Cl.: F16C 11/10, F16C 11/04

(54) **HINGE MECHANISM**

(30) Priority: 10.09.2010 JP 2010203617
(71) Applicant: Mitsubishi Steel MFG. CO., LTD., Chuo-ku Tokyo 104-8550 (JP)
(72) Inventor: KAKIZAKI, Judou, Tokyo 104-8550 (JP)
(74) Representative: Regimbeau
(86) International application number: PCT/JP2011/070178
(87) International publication number: WO 2012/033056

(57) **Abstract**

A hinge mechanism includes a fixed cam with first and second sector shaped protruding portions at a fixed cam surface and a rotating cam with first and second sector shaped concave portions at a rotating cam surface, wherein the first and second sector shaped protruding portions engage the first and second sector shaped concave portions and inner and outer periphery protruding portions at the first and second sector shaped protruding portions of the fixed cam surface engage inner and outer periphery concave portions at the first and second sector shaped concave portions of the rotating cam surface at an engaging position. Further, rotation side protruding portions formed at positions other than the concave portions of the rotating cam surface engages at least two positions of the protruding portions formed at the fixed cam surface, respectively, at a position other than the engaging position.

## Description

### BACKGROUND OF THE INVENTION

### 1. Field of the Invention

The present invention relates to a hinge mechanism and more specifically, to a hinge mechanism which is used for a folding portion of an electronic device such as a mobile phone, a notebook personal computer or the like.

### 2. Description of the Related Art

For an electronic device such as a mobile phone, a notebook personal computer or the like, for example, an electronic device configured such that a cover portion is rotatably provided with respect to a body portion is included. For such a type of the electronic device, a hinge mechanism is provided at a connecting portion of the body portion and the cover portion. Further, it is necessary for the cover portion of a mobile electronic device not to be easily opened with respect to the body portion.

Thus, a hinge mechanism having a structure in which a first cam including a protruding portion and a second cam including a concave portion which engages the protruding portion are placed to face each other has been designed. Further, for this structure of the hinge mechanism, for example, the first cam (fixed cam) is connected to the body portion and the second cam (rotating cam) is connected to the cover portion and the cover portion rotates with respect to the body portion when the rotating cam rotates with respect to the fixed cam (Patent Document 1).

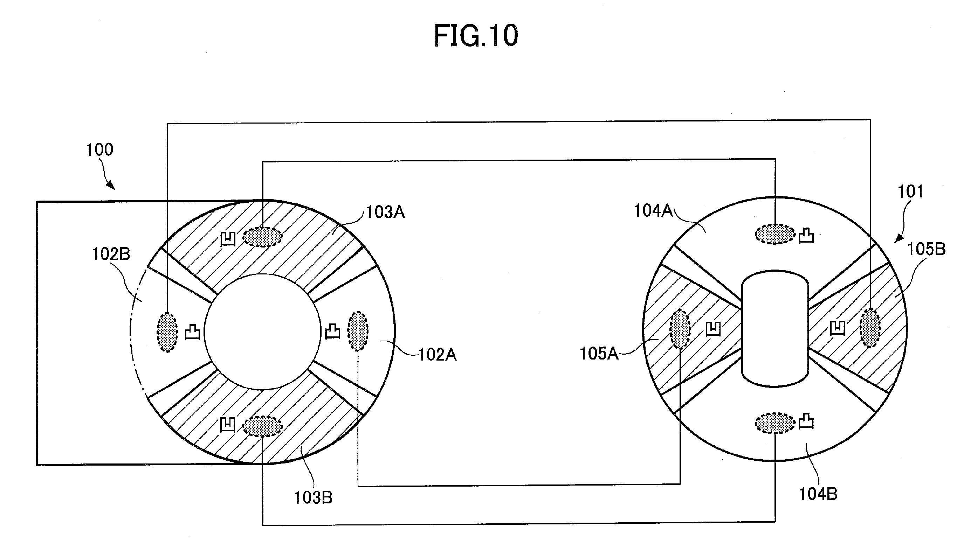

Fig. 10 is a schematic structure view for explaining a structure of a general hinge mechanism. The hinge mechanism includes a fixed cam 100 and a rotating cam 101. The fixed cam 100 is provided with fixed side sector shaped protruding portions 1 02A and 102B and fixed side sector shaped concave portions 103A and 103B each having a sector shape at a cam surface. Specifically, in Fig. 10, the fixed side sector shaped protruding portion 102A, the fixed side sector shaped concave portion 103A, the fixed side sector shaped protruding portion 102B and the fixed side sector shaped concave portion 103B are formed in this order in an anti-clockwise direction. Further, the fixed side sector shaped protruding portion 102A and the fixed side sector shaped protruding portion 102B are placed to be 180° apart from each other while the fixed side sector shaped concave portion 103A and the fixed side sector shaped concave portion 103B are also placed to be 180° apart from each other.

Similarly, the rotating cam 101 is provided with rotation side sector shaped concave portions 105A and 105B and rotation side sector shaped protruding portions 1 04A and 104B each having a sector shape at a cam surface. The rotation side sector shaped concave portion 105A, the rotation side sector shaped protruding portion 104A, the rotation side sector shaped concave portion 105B and the rotation side sector shaped protruding portion 104B are formed in this order in a clockwise direction in Fig. 10. Further, the rotation side sector shaped concave portion 1 05A and the rotation side sector shaped concave portion 105B are placed to be 180° apart from each other, while the rotation side sector shaped protruding portion 104A and the rotation side sector shaped protruding portion 104B are placed to be 180° apart from each other.

In the fixed cam 100 and the rotating cam 101 having the above structure, a so-called "suction force" is generated at a state in which the fixed side sector shaped protruding portions 102A and 102B of the fixed cam 100 and the rotation side sector shaped concave portions 105A and 105B of the rotating cam 101 are engaged so that the rotation of the cover portion with respect to the body portion can be regulated. The suction force can prevent shaking of the cover portion with respect to the body portion.

In the general structure shown in Fig. 10, the suction force is generated at two states including a state in which the fixed side sector shaped protruding portion 1 02A engages the rotation side sector shaped concave portion 105A and the fixed side sector shaped protruding portion 102B engages the rotation side sector shaped concave portion 105B (it is assumed that the rotation angle of the rotating cam 101 is 0° at this time), and a state in which the fixed side sector shaped protruding portion 102A engages the rotation side sector shaped concave portion 105B and the fixed side sector shaped protruding portion 102B engages the rotation side sector shaped concave portion 105A.

The state when the fixed side sector shaped protruding portion 102A engages the rotation side sector shaped concave portion 105B and the fixed side sector shaped protruding portion 102B engages the rotation side sector shaped concave portion 105A is a state in which the rotating cam 101 is rotated 180° with respect to the state where the rotation angle is 0°. Thus, according to the general hinge mechanism, the suction force is generated at the two states including a state (the rotation angle of 0°) in which the cover portion is closed with respect to the body portion, and a state (the rotation angle of 180°) in which the cover portion is horizontally opened with respect to the body portion.

### [Patent Document]

### [Patent Document 1] Japanese Laid-open Patent Publication No. 2008-196563

Here, for a structure in which a liquid crystal display device is provided at a cover portion, it is desirable that the cover portion is retained while being inclined at a predetermined angle with respect to the body portion (the cover portion is tilted) in order to improve visibility of the liquid crystal display device.

In a recent electronic device, a hinge mechanism has been suggested which is configured such that the cover portion is stopped (locked) to the body portion only at a position where the cover portion is closed with respect to the body portion and the cover portion is stopped at an arbitrary angle with respect to the body portion within an angle range except the above stopped (locked) position. For the hinge mechanism having such a structure, a position at which a protruding portion formed at a first cam and a concave portion formed at a second cam engage each other (a position where a suction force is generated) becomes only a single point.

The above structure is equal to a structure of the general hinge mechanism shown in Fig. 10 where the structure of the fixed cam 100 is formed to be a concave portion except the fixed side sector shaped protruding portion 1 02A and the structure of the rotating cam 101 is formed to be a protruding portion except the rotation side sector shaped concave portion 105A.

For the above structure, shaking does not occur at a state in which the protruding portion and the concave portion engage (a state where the suction force is generated). However, when the protruding portion and the concave portion do not engage each other, the protruding portion which is formed at a single position of the first cam slides on the protruding portion of the second cam other than the concave portion. Thus, a large space portion is formed between the first cam and the second cam so that first and second cam are inclined having a contacting position of the protruding portion and a flat surface portion as a center, thereby causing shaking during a rotational operation by the hinge mechanism.

### SUMMARY OF THE INVENTION

The present invention is made in light of the above problems, and provides a hinge mechanism capable of ensuring a stable rotational operation without shaking.

According to an embodiment, there is provided a hinge mechanism including a shaft; a fixed cam provided with a first insertion hole through which the shaft is inserted, and a fixed cam surface at which first and second sector shaped protruding portions are formed, the shaft being rotatably provided in the first insertion hole; a rotating cam provided with a second insertion hole through which the shaft is inserted and a rotating cam surface at which first and second sector shaped concave portions are formed and provided to be movable in an axial direction of the shaft and not to be rotatable with respect to the shaft; and an elastic member which presses the fixed cam surface and the rotating cam surface to be in contact with each other, wherein the fixed cam surface is provided with inner periphery protruding portions to be extended in both sides from the first sector shaped protruding portion along the first insertion hole, and outer periphery protruding portions to be extended from both sides of the second sector shaped protruding portion along an outer periphery of the fixed cam, the rotating cam surface is provided with inner periphery concave portions extended from both sides of the first sector shaped concave portion along the second insertion hole and outer periphery concave portions extended from both sides of the second sector shaped concave portion along an outer periphery of the rotating cam, the first and second sector shaped protruding portions are configured to engage the first and second sector shaped concave portions, respectively, and the inner periphery and outer periphery protruding portions are configured to engage the inner periphery and outer periphery concave portions, respectively, at an engaging position at which the fixed cam and the rotating cam engage, and rotation side protruding portions formed at positions other than the first and second sector shaped concave portions and the inner periphery and outer periphery concave portions of the rotating cam surface is configured to engage either of the first sector shaped protruding portion, the second sector shaped protruding portion, the inner periphery protruding portion and the outer periphery protruding portion of the fixed cam surface, respectively, at a position other than the engaging position.

According to the present invention, a stable rotational operation is ensured without shaking even for a hinge mechanism which is only engaged to be stopped (generates a suction force) once while rotating for 360°.

### BRIEF DESCRIPTION OF THE DRAWINGS

Fig. 1 is a cross-sectional view of a hinge mechanism of an embodiment;
Fig. 2A is a left side view showing the hinge mechanism of the embodiment;
Fig. 2B is a front view showing the hinge mechanism of the embodiment;
Fig. 2C is a right side view showing the hinge mechanism of the embodiment;
Fig. 3 is a perspective view for explaining a fixed cam composing the hinge mechanism of the embodiment;
Fig. 4 is a perspective view for explaining a rotating cam composing the hinge mechanism of the embodiment;
Fig. 5A is a perspective view showing a state of a combination of the fixed cam positioned at an upper side and the rotating cam positioned at a lower side;
Fig. 5B is a perspective view showing a state of a combination of the rotating cam positioned at the upper side and the fixed cam positioned at the lower side;
Fig. 6 is a view showing a state where a rotation angle of a rotating cam is 0° in the hinge mechanism of the embodiment;
Fig. 7 is a view showing a state where the rotation angle of the rotating cam is 90° in the hinge mechanism of the embodiment;
Fig. 8 is a view showing a state where the rotation angle of the rotating cam is 180° in the hinge mechanism of the embodiment;
Fig. 9 is a view showing an electronic device on which the hinge mechanism of the embodiment is mounted; and
Fig. 10 is a schematic structure view for explaining a general hinge mechanism.

### DETAILED DESCRIPTION OF THE PREFERRED EMBODIMENTS

The invention will be described herein with reference to illustrative embodiments.

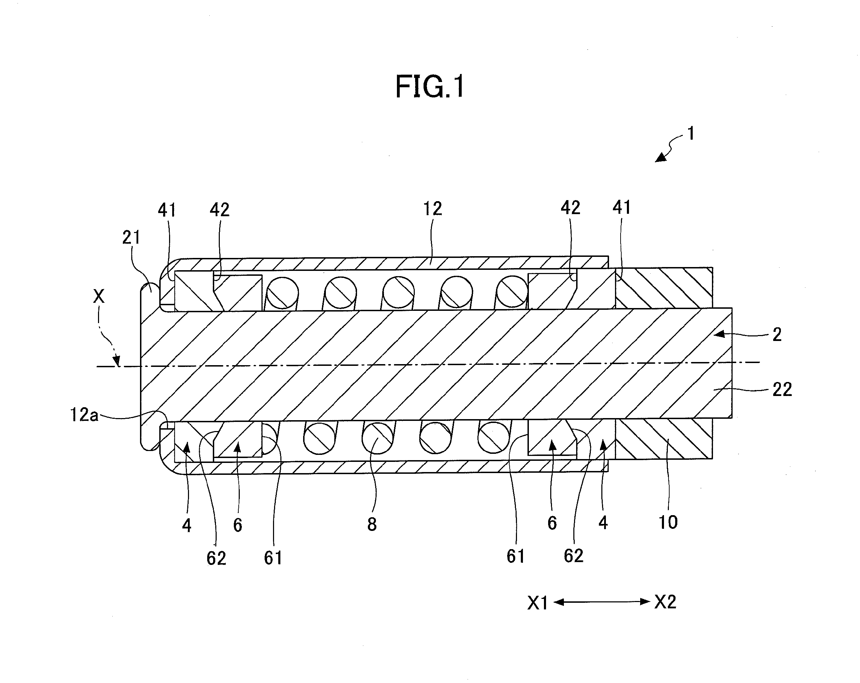

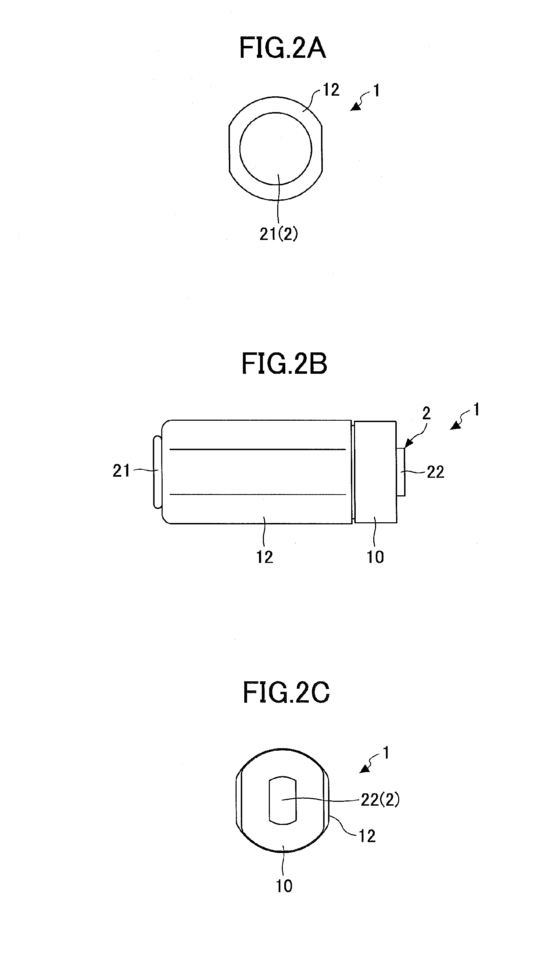

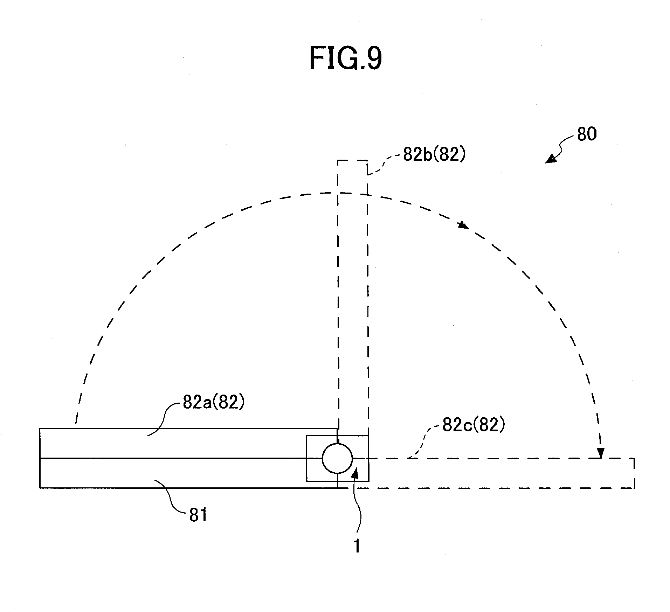

Fig. 1 and Fig. 2A to Fig. 2C show a hinge mechanism 1 in an exemplary embodiment. Fig. 1 is a cross-sectional view of the hinge mechanism 1 and Fig. 2A to Fig. 2C show the hinge mechanism 1. The hinge mechanism 1 is provided at a connecting portion which rotatably connects a body portion 81 and a cover portion 82 of an electronic device 80 such as a mobile phone, a notebook personal computer or the like as shown in Fig. 9, for example.

The hinge mechanism 1 mainly includes a shaft 2, a fixed cam 4, a rotating cam 6, a spring 8, a head 10, a housing 12 and the like.

The shaft 2 has a structure in which a flange 21 provided at a left end portion in Fig. 1 and Fig. 2B and an oval shaped portion 22 extended from the flange 21 in a rightward direction in the drawings and having an oval shape cross-sectional view are integrally formed. The shaft 2 is inserted in the housing 12.

The housing 12 has a tubular shape with a bottom surface which is provided with a hole 12a. The shaft 2 is inserted into the housing 12 from the hole 12a. The diameter of the flange 21 is set larger than the diameter of the hole 12a. Thus, when the shaft 2 is inserted in the housing 12, the position is determined as the flange 21 contacts the bottom surface of the housing 12.

The fixed cam 4 and the rotating cam 6 are attached to the shaft 2. One fixed cam 4 and one rotating cam 6 form a pair and two pairs of the fixed cam 4 and the rotating cam 6 are provided in this embodiment. Specifically, the fixed cams 4 and the rotating cams 6 are provided such that the shaft 2 is inserted there into as well as into the spring 8 in the housing 12. The pairs of the fixed cam 4 and the rotating cam 6 are provided both sides while intervening the spring 8 at a center.

In each of the pairs of the fixed cam 4 and the rotating cam 6, the fixed cam 4 is provided outer and the rotating cam 6 is provided inner. Thus, in Fig. 1, an outer side surface 41 of the fixed cam 4 at the left side contacts the bottom surface of the housing 12, and the outer side surface 41 of the fixed cam 4 at the right side contacts the head 10.

The rotating cams 6 provided at the left and right positions of the shaft 2 are configured to be pushed by the elastic force of the spring 8 toward the fixed cams 4, respectively. With this, a cam surface 42 of the fixed cam 4 (a fixed cam surface) and a cam surface 62 of the rotating cam 6 (a rotating cam surface) become in contact with each other in a pressed status. The structures of the fixed cam 4 and the rotating cam 6 are explained later in detail.

The head 10 is fixed at an end portion of the shaft 2 in a direction shown by an arrow X2 in the drawings. Thus, the head 10 integrally rotates with the shaft 2. The head 10 is fixed to the cover portion 82 and the housing 12 is fixed to the body portion 81 of the electronic device 80 as shown in Fig. 9, for example.

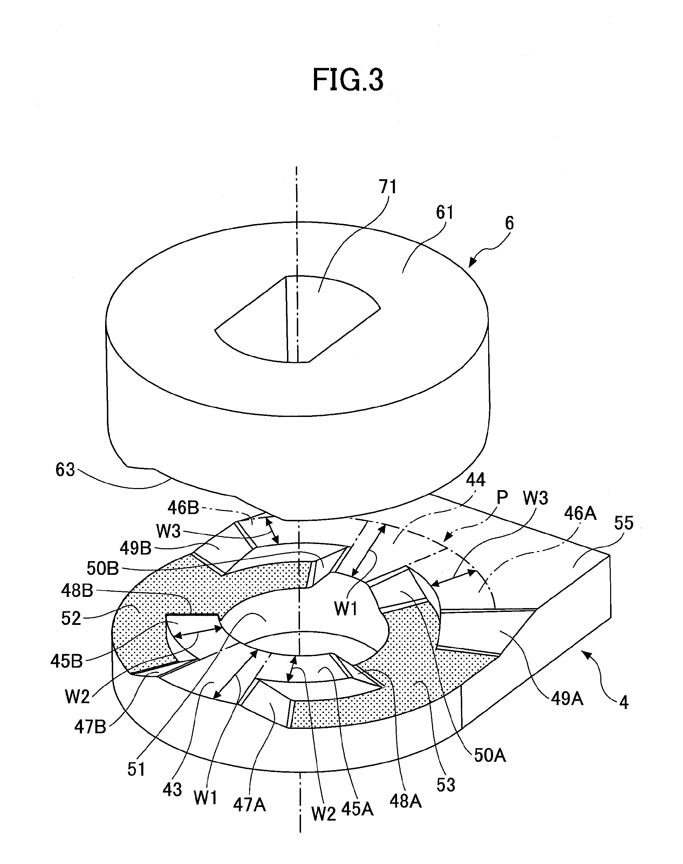

Next, with reference to Fig. 3 to Fig. 6, the structure of the fixed cam 4 and the rotating cam 6 is explained in detail.

Fig. 3 is a view for explaining the fixed cam 4. The fixed cam surface 42 of the fixed cam 4 is provided with a first sector shaped protruding portion 43, a second sector shaped protruding portion 44, inner periphery protruding portions 45A and 45B, outer periphery protruding portions 46A and 46B, fixed side concave portions 52 and 53 and the like. The fixed cam 4 is further provided with an insertion hole 51 through which the shaft 2 is to be inserted at a center position.

The first sector shaped protruding portion 43 corresponds to the fixed side sector shaped protruding portion 102A shown in Fig. 10 and has a sector shape. The second sector shaped protruding portion 44 corresponds to the fixed side sector shaped protruding portion 102B and has a sector shape. The first sector shaped protruding portion 43 and the second sector shaped protruding portion 44 are placed to face each other while intervening the insertion hole 51 therebetween (to be 180° apart from each other).

The first sector shaped protruding portion 43 and the second sector shaped protruding portion 44 have the same shape and are point symmetrically placed with the center axis of the insertion hole 51 (shown by an arrow O1 in the drawings) as a center. Thus, the central angles of the first sector shaped protruding portion 43 and the second sector shaped protruding portion 44 each having the center axis O1 as a center are the same angle (θ1).

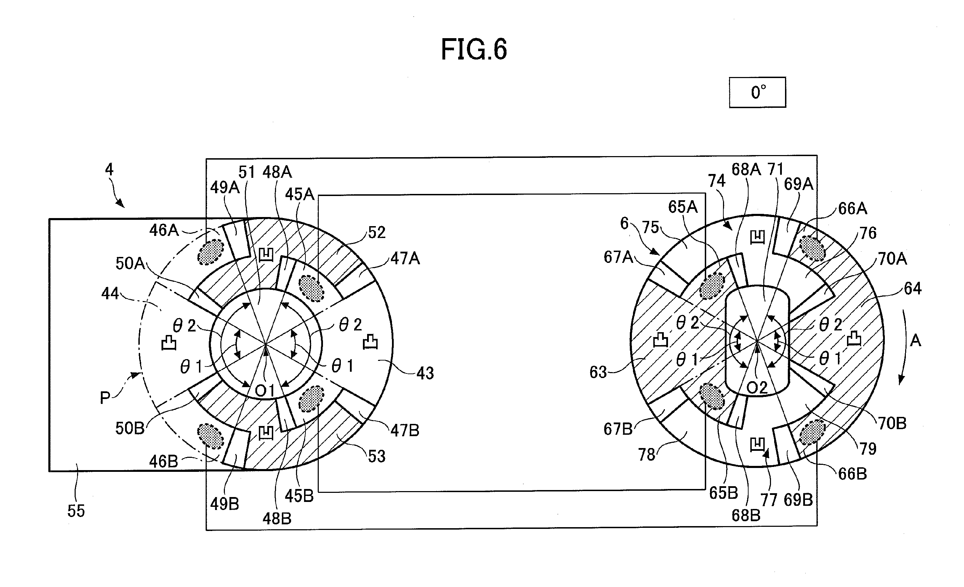

Here, although the second sector shaped protruding portion 44 is not shown to have a sector shape as the second sector shaped protruding portion 44 is integrally formed with an extending portion 55 formed at the fixed cam 4, an area of the fixed cam 4 which functions as a cam is a circular area which overlaps the rotating cam (this area on the extending portion 55 is shown by a chain line P). Thus, the shape of the second sector shaped protruding portion 44 is a sector shape substantially shown by the chain line P in Fig. 3 and Fig. 6.

The inner periphery protruding portions 45A and 45B are formed to extend both sides of the first sector shaped protruding portion 43 along the insertion hole 51. The size W2 (shown by arrows in Fig. 3) of the inner periphery protruding portions 45A and 45B in the radial direction is set to be less than or equal to a half of the size W1 (shown by arrows in Fig. 3) of the first sector shaped protruding portion 43 in the radial direction (W2 ≤ (W1/2)). Further, the central angle θ2 (see Fig. 6) with the center axis O1 as the center of the total of the inner periphery protruding portions 45A and 45B is set to be larger than the central angle θ1 of the first sector shaped protruding portion 43 and smaller than 180° (θ1 < θ2 < 180°).

The outer periphery protruding portions 46A and 46B are formed to extend from the both sides of the second sector shaped protruding portion 44 along the outer periphery of the fixed cam 4. As described above, the area of the fixed cam 4 which functions as a cam is a circular area which overlaps the rotating cam 6. Thus, the outer periphery protruding portions 46A and 46B are formed to extend from both sides of the second sector shaped protruding portion 44 along the chain line P which indicates the area functioning as the cam.

The size W3 (shown by arrows in Fig. 3) of the outer periphery protruding portions 46A and 46B in the radial direction is set to be less than or equal to a half of the size W1 (shown by arrows in Fig. 3) of the second sector shaped protruding portion 44 in the radial direction (W3 ≤ (W1/2)). Further, the central angle with the center axis O1 as the center of the total of the outer periphery protruding portions 46A and 46B is set to be equal to the above described central angle θ2 of the inner periphery protruding portions 45A and 45B (see Fig. 6). Thus, the central angle θ2 of the outer periphery protruding portions 46A and 46B is also set to be larger than the central angle θ1 of the second sector shaped protruding portion 44 and smaller than 180° (θ1 < θ2 < 180°).

Further, at the fixed cam surface 42 of the fixed cam 4, areas other than the area where the above described first sector shaped protruding portion 43, the second sector shaped protruding portion 44, the inner periphery protruding portions 45A and 45B, and the outer periphery protruding portions 46A and 46B are formed are formed to be concave portions which are relatively concaved with respect to each of the protruding portions 43, 44, 45A, 45B, 46A and 46B (shown by dots in Fig. 3). In the following, the concaved areas other than each of the protruding portions 43, 44, 45A, 45B, 46A and 46B at the fixed cam surface 42 are referred to as fixed side concave portions 52 and 53.

Further, inclined surfaces 47A and 47B are formed at the both sides of the first sector shaped protruding portion 43 at interfaces with the fixed side concave portions 53 and 52, respectively, inclined surfaces 48A and 48B are formed at the interfaces between the inner periphery protruding portions 45A and 45B and the fixed side concave portions 53 and 52, respectively, inclined surfaces 50A and 50B are formed at the both sides of the second sector shaped protruding portion 44 at interfaces with the fixed side concave portions 53 and 52, respectively, and further, inclined surfaces 49A and 49B are formed at interfaces between the outer periphery protruding portions 46A and 46B and the fixed side concave portions 53 and 52, respectively. By forming these inclined surfaces, the fixed cam surface 42 and the rotating cam surface 62, both having convexo-concave surfaces, respectively, can be smoothly rotated while being pressed to be in contact with each other.

The fixed cam 4 is fixed to the housing 12. At this time, the fixed cam 4 is provided inside the housing 12 while having the shaft 2 inserted in the insertion hole 51 where the shaft 2 is configured to be rotatable therein.

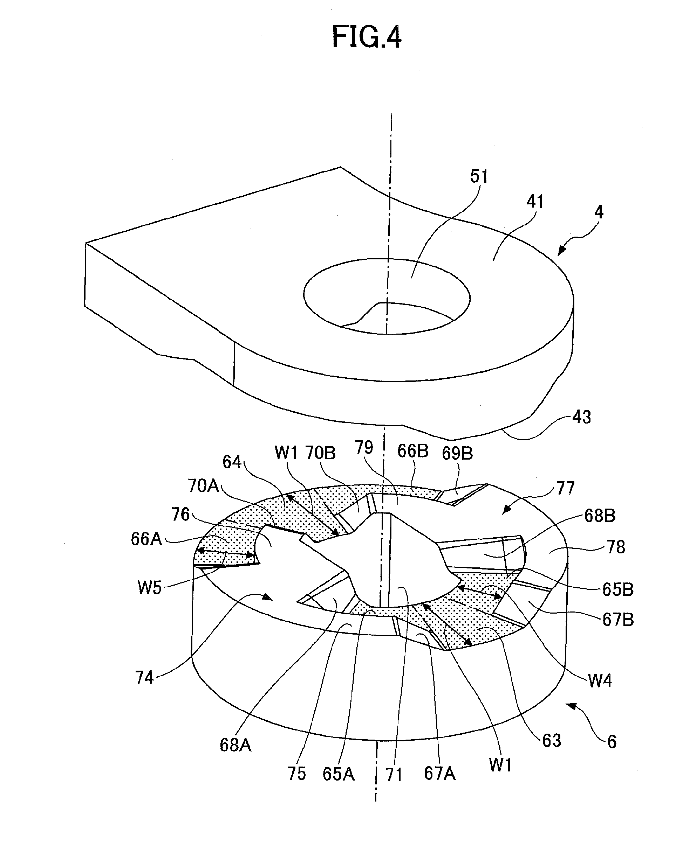

Fig. 4 is a view for explaining the rotating cam 6. The rotating cam surface 62 of the rotating cam 6 is provided with a first sector shaped concave portion 63, a second sector shaped concave portion 64, inner periphery concave portions 65A and 65B, outer periphery concave portions 66A and 66B, rotation side protruding portions 74 and 77 and the like (each of the concave portions are shown by dots). Further, the rotating cam 6 is provided with an oval shaped hole 71 through which the shaft 2 is to be inserted at a center position.

The first sector shaped concave portion 63 corresponds to the rotation side sector shaped concave portion 105A shown in Fig. 10 and has a sector shape. The first sector shaped concave portion 63 corresponds to the rotation side sector shaped concave portion 105B and has a sector shape. The first sector shaped concave portion 63 and the second sector shaped concave portion 64 are placed to face each other while intervening the oval shaped hole 71 therebetween (to be 180° apart from each other).

The first sector shaped concave portion 63 and the second sector shaped concave portion 64 have the same shape and are symmetrically placed with the center axis of the oval shaped hole 71 (shown by an arrow 02 in the drawings) as a center. Thus, the central angles of the first sector shaped concave portion 63 and the second sector shaped concave portion 64 having the center axis O2 as a center are the same angle and are angle (θ1) which is the same as the above described central angles of the first and second sector shaped protruding portions 43 and 44 of the fixed cam 4.

Further, the first and second sector shaped concave portions 63 and 64 are configured such that the shapes of the first and second sector shaped concave portions 63 and 64 in a plan view are the same as the above described shapes of the first and second sector shaped protruding portions 43 and 44 of the fixed cam 4. Specifically, as will be explained in the following, the first and second sector shaped concave portions 63 and 64 and the first and second sector shaped protruding portions 43 and 44 are configured to engage with each other, respectively, when the fixed cam 4 and the rotating cam 6 are at a predetermined engaging position.

The inner periphery concave portions 65A and 65B are formed to extend from both sides of the first sector shaped concave portion 63 along the oval shaped hole 71. The size W4 (shown by arrows in Fig. 4) of the inner periphery concave portions 65A and 65B in the radial direction is set to be less than or equal to a half of the size W1 (shown by arrows in Fig. 4) of the first sector shaped concave portion 63 in the radial direction (W4 ≤ (W1/2)). Further, the central angle θ2 (see Fig. 6) with the center axis O2 as the center of the total of the inner periphery concave portions 65A and 65B is set to be larger than the central angle θ1 of the first sector shaped concave portion 63 and smaller than 180° (θ1 < θ2 < 180°).

The inner periphery concave portions 65A and 65B are configured such that the shapes of the inner periphery concave portions 65A and 65B in a plan view are the same as the above described inner periphery protruding portions 45A and 45B of the fixed cam 4. Specifically, as will be explained later, the inner periphery concave portions 65A and 65B and the inner periphery protruding portions 45A and 45B are configured to engage with each other, respectively, when the fixed cam 4 and the rotating cam 6 are at the predetermined engaging position.

Further, the outer periphery concave portions 66A and 66B are formed to extend from both sides of the second sector shaped concave portion 64 along the outer periphery of the rotating cam 6. The size W5 (shown by arrows in Fig. 4) of the outer periphery concave portions 66A and 66B in the radial direction is set to be a half of the size W1 (shown by arrows in Fig. 4) of the second sector shaped concave portion 64 in the radial direction (W5 ≤ (W1/2)). Further, the central angle with the center axis O2 as the center of the total of the outer periphery concave portions 66A and 66B is set to be equal to the central angle θ2 of the inner periphery concave portions 65A and 65B. Thus, the central angle θ2 of the outer periphery concave portions 66A and 66B is set to be larger than the central angle θ1 of the second sector shaped concave portion 64 and smaller than 180° (θ1 < θ2 < 180°).

Further, at the rotating cam surface 62 of the rotating cam 6, areas other than the areas where the above described first sector shaped concave portion 63, the second sector shaped concave portion 64, the inner periphery concave portions 65A and 65B, and the outer periphery concave portions 66A and 66B are formed are formed to be a protruding portions which are relatively protruded from each of the concave portions 63, 64, 65A, 65B, 66A and 66B. In the following, the protruded areas other than each of the concave portions 63, 64, 65A, 65B, 66A and 66B at the fixed cam surface 62 are referred to as rotation side protruding portions 74 and 77.

The rotation side protruding portions 74 and 77 include outer periphery protruding portions 75 and 78 formed at the outer periphery side, and inner periphery protruding portions 76 and 79 formed at the inner periphery side, respectively. The outer periphery protruding portions 75 and 78 are formed along the outer periphery edge of the rotating cam 6. The inner periphery protruding portions 76 and 79 are formed along the oval shaped hole 71. The sizes of the outer periphery protruding portions 75 and 78 in the radial direction are equal to the size W5 of the outer periphery concave portions 66A and 66B, and the sizes of the inner periphery protruding portions 76 and 79 in the radial direction are equal to the size W4 of the inner periphery concave portions 65A and 65B.

Further, inclined surfaces 67A and 67B are formed at both sides of the first sector shaped concave portion 63 at interfaces with the rotation side protruding portions 74 and 77, respectively, inclined surfaces 68A and 68B are formed at interfaces between the inner periphery concave portions 65A and 65B and the rotation side protruding portions 74 and 77, respectively, inclined surfaces 70A and 70B are formed at both sides of the second sector shaped concave portion 64 at interfaces with the rotation side protruding portions 74 and 77, respectively, and further, inclined surfaces 69A and 69B are formed at interfaces between the outer periphery concave portions 66A and 66B and the rotation side protruding portions 74 and 77, respectively. By forming these inclined surfaces, the fixed cam surface 42 and the rotating cam surface 62, both having the convexo-concave surfaces, respectively, can be smoothly rotated while being pressed to be in contact with each other.

The above described rotating cam 6 is provided in the housing 12 to be rotated with the shaft 2. It means that the rotating cam 6 is provided inside the housing 12 while having the shaft 2 inserted in the oval shaped hole 71. At this time, the oval shaped hole 71 has an oval shape, and the cross-sectional view of the shaft 2 is also a corresponding oval shape. Thus, the rotating cam 6 is not capable of rotating with respect to the shaft 2. However, the rotating cam 6 is configured to be movable in the housing 12 in an axis line direction of the shaft 2 (a direction shown by arrows X1 and X2 in Fig. 1).

As described above, for the fixed cam 4 and the rotating cam 6 as structured above, the cam surfaces 42 and 62 of the fixed cam 4 and the rotating cam 6 are pressed by the spring 8 to be in contact with each other. The spring 8 is coaxially provided with the shaft 2 as the shaft is being inserted therein. Torques are generated between the cam surfaces 42 and 62 by the elastic force of the spring 8.

Next, the operation of the above described hinge mechanism 1 is explained mainly with references to Fig. 6 to Fig. 8.

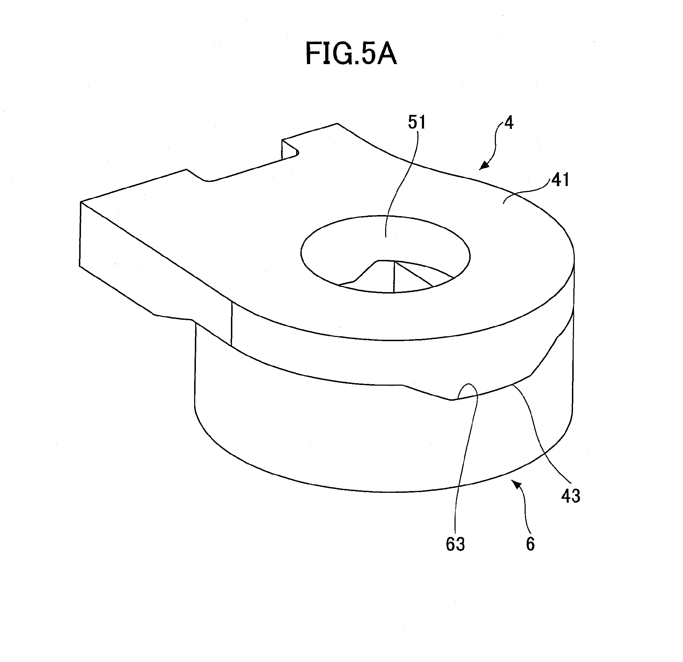

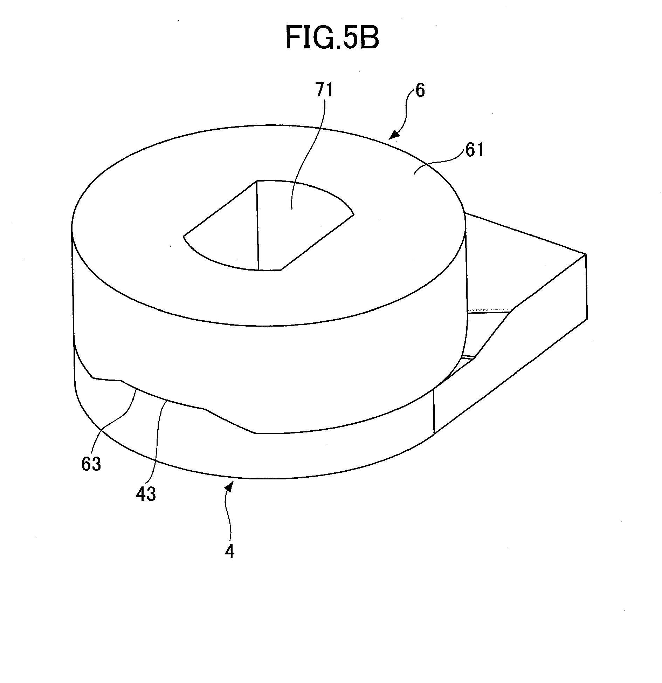

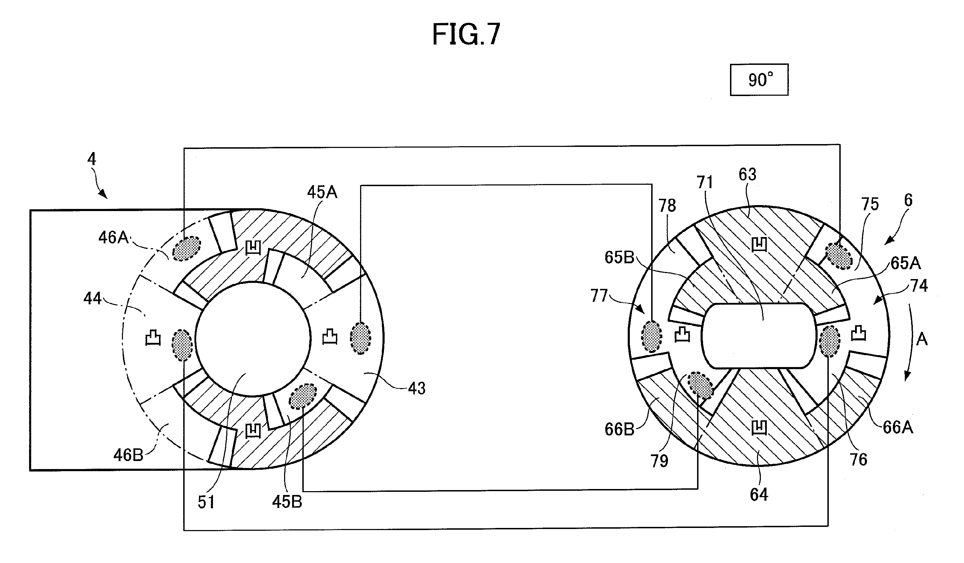

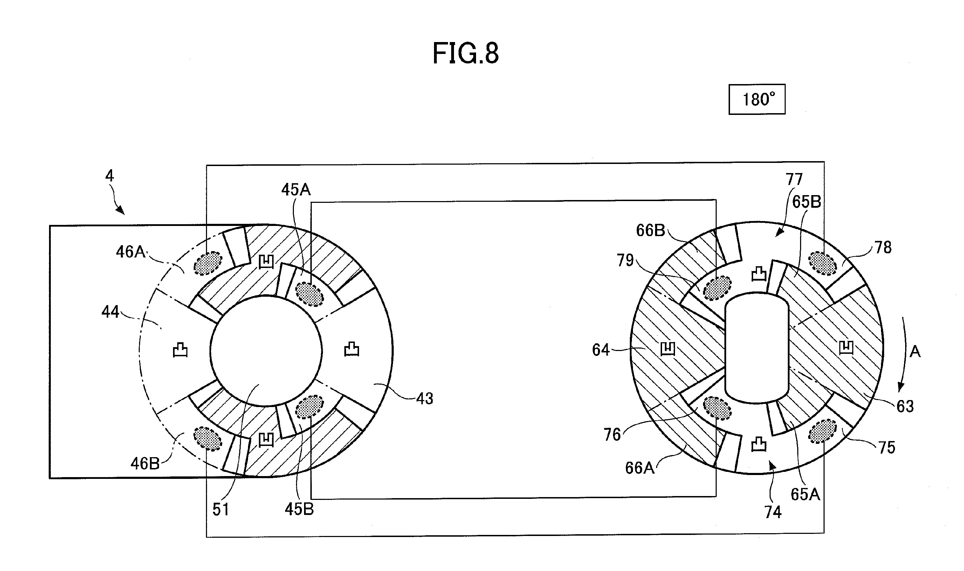

As described above, the fixed cam 4 and the rotating cam 6 are configured such that the fixed cam surfaces 42 and the rotating cam surfaces 62 are pressed to be in contact with each other, respectively, in the housing 12 (see Fig. 2A - Fig. 2C and Fig. 5A - Fig. 5B). However, in Fig. 6 to Fig. 8, exploded states in which the fixed cam 4 and the rotating cam 6, which are actually pressed to be in contact with each other, are shown for explanation. Thus, in a state shown in Fig. 6, for example, actually, the first sector shaped protruding portion 43 and the first sector shaped concave portion 63 are pressed in contact, and the second sector shaped protruding portion 44 and the second sector shaped concave portion 64 are pressed in contact. In Fig. 7 and Fig. 8, views are shown in an exploded manner similar to Fig. 6.

Fig. 6 shows a state in which each of the protruding portions 43, 44, 45A, 45B, 46A and 46B of the fixed cam 4 engages each of the concave portions 63, 64, 65A, 65B, 66A and 66B of the rotating cam 6. Specifically, the first sector shaped protruding portion 43 engages the first sector shaped concave portion 63, the second sector shaped protruding portion 44 engages the second sector shaped concave portion 64, the inner periphery protruding portions 45A and 45B engage the inner periphery concave portions 65A and 65B, respectively, and the outer periphery protruding portions 46A and 46B engage the outer periphery concave portions 66A and 66B, respectively.

As described above, the shape of each of the protruding portions 43, 44, 45A, 45B, 46A and 46B and the shape of each of the concave portions 63, 64, 65A, 65B, 66A and 66B respectively corresponds with each other. The shapes of the fixed side concave portions 52 and 53 correspond the shapes of the rotation side protruding portions 74 and 77.

Thus, when the fixed cam 4 and the rotating cam 6 take a position in which each of the protruding portions 43, 44, 45A, 45B, 46A and 46B and each of the concave portions 63, 64, 65A, 65B, 66A and 66B of the rotating cam 6 face with each other in accordance with the rotation of the rotating cam 6 (the position is referred to as an "engaging position" hereinafter), each of the protruding portions 43, 44, 45A, 45B, 46A and 46B and each of the concave portions 63, 64, 65A, 65B, 66A and 66B of the rotating cam 6 engage with each other, respectively.

By setting this engaging position to the position at which the cover portion 82 is closed with respect to the body portion 81 in Fig. 9 (the position shown by the cover portion 82a in the drawing), a suction function (a function of increasing torque) can be generated at the engaging position. Thus, the cover portion 82a can be regulated at a closed position to prevent generation of shaking of the cover portion 82a. Here, the angle between the body portion 81 and the cover portion 82a is called angle 0° and the state of the body portion 81 and the cover portion 82a at this time is referred to as a cover closing state.

In this embodiment, the shape of each of the protruding portions 43, 44, 45A, 45B, 46A and 46B and the shape of each of the concave portions 63, 64, 65A, 65B, 66A and 66B are configured such that engagement is generated only at the engaging position. It means that in the hinge mechanism 1 of the embodiment, the rotating cam 6 engages the fixed cam 4 only once at which the suction force is generated while being rotated for 360°. Thus, the suction function is generated only when the cover portion 82 is closed with respect to the body portion 81 (at the cover closing state) so that the cover portion 82 is engaged to be stopped in the cover closing state.

Fig. 7 shows a state in which the rotating cam 6 is rotated for 90° in a direction shown by an arrow A from the engaging position (hereinafter, referred to as a "90° rotated state"). The 90° rotated state is a state in which the cover portion 82 is perpendicularly opened with respect to the body portion 81 in Fig. 9 (the cover portion at this state is shown by a reference 82b).

When the rotating cam 6 is rotated in the direction shown by the arrow A, the engagement of each of the protruding portions 43, 44, 45A, 45B, 46A and 46B and each of the shape of concave portions 63, 64, 65A, 65B, 66A and 66B, respectively, is released and the suction function (the function of increasing the torque) disappears. At the 90° rotated state, the first sector shaped protruding portion 43 engages a center position of the rotation side protruding portion 77 (a position at which the outer periphery protruding portion 78 and the inner periphery protruding portion 79 are connected), and the inner periphery protruding portion 45B engages the inner periphery protruding portion 79 of the rotation side protruding portion 77. Further, the second sector shaped protruding portion 44 engages a center position of the rotation side protruding portion 74 (a position at which the outer periphery protruding portion 75 and the inner periphery protruding portion 76 are connected), and the outer periphery protruding portion 46A engages the outer periphery protruding portion 75 of the rotation side protruding portion 74.

It means that in the hinge mechanism 1 of the embodiment, the rotation side protruding portion 74 engages two positions including the second sector shaped protruding portion 44 and the outer periphery protruding portion 46A, and the rotation side protruding portion 77 engages two positions including the first sector shaped protruding portion 43 and the inner periphery protruding portion 45B at the 90° rotated state.

Fig. 8 shows a state in which the rotating cam 6 is further rotated for 90° in the direction shown by the arrow A from the 90° rotated state (hereinafter, referred to as a "180° rotated state"). The 180° rotated state corresponds to a state in which the cover portion 82 is horizontally opened with respect to the body portion 81 in Fig. 9 (the cover portion at this state is shown by a reference 82c).

At the 180° rotated state, the inner periphery protruding portion 45A engages the inner periphery protruding portion 79 of the rotation side protruding portion 77 and the inner periphery protruding portion 45B engages the inner periphery protruding portion 76 of the rotation side protruding portion 74. Further, the outer periphery protruding portion 46A engages the outer periphery protruding portion 78 of the rotation side protruding portion 77, and the outer periphery protruding portion 46B engages the outer periphery protruding portion 75 of the rotation side protruding portion 74.

Thus, in the hinge mechanism 1 of the embodiment, the rotation side protruding portion 74 engages two positions including the inner periphery protruding portion 45B and the outer periphery protruding portion 46B, and the rotation side protruding portion 77 engages two positions including the inner periphery protruding portion 45A and the outer periphery protruding portion 46A at the 180° rotated state.

As described above, in the hinge mechanism 1 of the embodiment, except at the engaging position, each of the rotation side protruding portions 74 and 77 formed at the rotating cam 6 is configured to engage two or more positions selected from the first sector shaped protruding portion 43, the second sector shaped protruding portion 44, the inner periphery protruding portions 45A and 45B and the outer periphery protruding portions 46A and 46B formed at the fixed cam 4. Thus, even when the fixed cam 4 and the rotating cam 6 are at a position other than the engaging position, shaking between the fixed cam 4 and the rotating cam 6 is not generated so that a stable rotational operation can be actualized.

Here, as described above, as each of the rotation side protruding portions 74 and 77 formed at the rotating cam 6 engages two or more positions including the protruding portions 43, 44, 45A, 45B, 46A and 46B formed at the fixed cam 4, except at the position other than the engaging position, the protruding portions 43, 44, 45A, 45B, 46A and 46B and the rotation side protruding portions 74 and 77 are pressed to be in contact by the elastic force of the spring 8. Thus, when the hinge mechanism 1 is attached to the electronic device 80 by a friction force generated between both cams, the cover portion 82 can be freely stopped (stopped at an arbitrary rotation angle) with respect to the body portion 81.

Further, as described above, according to the embodiment, each of the rotation side protruding portions 74 and 77 formed at the rotating cam 6 is configured to engage two or more positions of the protruding portions 43, 44, 45A, 45B, 46A and 46B formed at the fixed cam 4 at a position other than the engaging position. However, this engagement positions are not limited to two and may be structured to be engaged at three or more positions. With this structure, the rotational operation can be further stabilized.

Although a preferred embodiment has been specifically illustrated and described, it is to be understood that minor modifications may be made therein without departing from the spirit and scope of the invention as defined by the claims.

The present application is based on Japanese Priority Application No. 2010-203617 filed on September 10, 2010, the entire contents of which are hereby incorporated by reference.

## Claims

1. A hinge mechanism comprising:
a shaft;
a fixed cam provided with a first insertion hole through which the shaft is inserted, and a fixed cam surface at which first and second sector shaped protruding portions are formed, the shaft being rotatably provided in the first insertion hole;
a rotating cam provided with a second insertion hole through which the shaft is inserted and a rotating cam surface at which first and second sector shaped concave portions are formed and provided to be movable in an axial direction of the shaft and not to be rotatable with respect to the shaft; and
an elastic member which presses the fixed cam surface and the rotating cam surface to be in contact with each other,
wherein the fixed cam surface is provided with inner periphery protruding portions to be extended in both sides from the first sector shaped protruding portion along the first insertion hole, and outer periphery protruding portions to be extended from both sides of the second sector shaped protruding portion along an outer periphery of the fixed cam,
the rotating cam surface is provided with inner periphery concave portions extended from both sides of the first sector shaped concave portion along the second insertion hole and outer periphery concave portions extended from both sides of the second sector shaped concave portion along an outer periphery of the rotating cam,
the first and second sector shaped protruding portions are configured to engage the first and second sector shaped concave portions, respectively, and the inner periphery and outer periphery protruding portions are configured to engage the inner periphery and outer periphery concave portions, respectively, at an engaging position at which the fixed cam and the rotating cam engage, and
rotation side protruding portions formed at positions other than the first and second sector shaped concave portions and the inner periphery and outer periphery concave portions of the rotating cam surface are configured to engage either of the first sector shaped protruding portion, the second sector shaped protruding portion, the inner periphery protruding portion and the outer periphery protruding portion of the fixed cam surface, respectively, at a position other than the engaging position.

2. The hinge mechanism according to claim 1,
wherein the rotation side protruding portions of the rotating cam surface are configured to engage at least two positions selected from the first sector shaped protruding portion, the second sector shaped protruding portion, the inner periphery protruding portion and the outer periphery protruding portion of the fixed cam surface, respectively, at the position other than the engaging position.

3. The hinge mechanism according to claim 2,
wherein each of the rotation side protruding portions respectively of the rotating cam surface includes
an outer periphery protruding portion formed at an outer periphery side and having a size in the radial direction the same as a size in the radial direction of the outer periphery concave portion, and
an inner periphery protruding portion formed at an inner periphery side and having a size in the radial direction the same as a size in the radial direction of the inner periphery concave portion.

4. The hinge mechanism according to claim 2,
wherein the rotation side protruding portions are pressed in contact with the fixed cam surface by the elastic force of the elastic member when each of the rotation side protruding portions of the rotating cam surface engages at least the two positions selected from the first sector shaped protruding portion, the second sector shaped protruding portion, the inner periphery protruding portion, and the outer periphery protruding portion of the fixed cam surface.
